# EUROPEAN PATENT APPLICATION

(11) **EP 1 953 394 A1**
(43) Date of publication of application: **06.08.2008**
(21) Application number: 07425053.1
(22) Date of filing: 01.02.2007
(51) Int. Cl.: F15B 15/14, F16F 9/32, F16L 41/04

(54) **Method for manufacturing shock absorbers, and shock absorber obtained with the method**

(71) Applicant: PAIOLI S.p.A., 40019 S. Agata Bolognese (Bologna) (IT)
(72) Inventor: Pancaldi, Paolo, 40014 Crevalcore (IT)
(74) Representative: Alagem Modiano, Lara S.

(57) **Abstract**

A method for manufacturing shock absorbers (1) of the type comprising a cylinder (2) within which a piston (3) immersed in a fluid (4) is arranged slidingly. The cylinder (2) has an opening (5) for connection, by means of an appropriate duct (6), to a corresponding opening (7) of an external reservoir (8), which also contains the fluid (4). The method consists in performing heat-flow drilling, by means of the technique normally known as "Flowdrilling", at the area where the opening (5, 7) is provided, of at least one of the elements for containing the fluid (4), and in providing the mutual hermetic connection of the at least one tubular body (23), provided at the opening (5, 7) formed by heat-flow drilling, by means of the duct (6), to the other opening (7, 5).

## Description

The present invention relates to a method for manufacturing shock absorbers and to a shock absorber obtained with the method.

Vehicles of any kind are usually provided with suspensions which are designed to uncouple the wheels and the chassis of the vehicle in terms of vibrations and vertical oscillations.

Therefore, the user who is on board the vehicle, when the vehicle travels over an uneven surface (with holes or discontinuities of any kind) perceives forces which are greatly damped with respect to those experienced by the wheels indeed thanks to the presence of the suspensions.

The suspensions provide for the presence of an elastically acting element (generally a spring) and of a damping element, known as shock absorber.

The effect of the shock absorber is to dampen the behavior of the elastically acting element (the reaction of which would be substantially instantaneous, except for inertial delays) to slow as much as possible the movements of the chassis with respect to the wheels, reducing the forces to which anyone traveling on the vehicle is subjected.

The shock absorber generally comprises a cylinder, within which a piston can slide: the cylinder generally contains a specific quantity of an appropriate fluid. To allow the piston to slide within the cylinder, the fluid must be transferred from the cylinder section that lies upstream of the head of the piston to the downstream section (or vice versa).

The transfer of fluid occurs by way of the presence of appropriate calibrated transfer ports, which determine the upper limit for the transfer rate, consequently limiting the speed at which the piston can slide within the cylinder.

Some types of shock absorber have an external reservoir (which acts as an accumulation chamber for the fluid), which is connected to the end portion of the cylinder by means of an appropriate duct.

In this manner, it is possible to use a small cylinder (making it adapted even for installation in minimal spaces, such as in motorcycles for example) while still having optimum performance.

The duct is associated with the cylinder and the external reservoir by means of a threaded sleeve, which is welded at a respective end hole provided in each of said parts.

Therefore, the provision of such a kind of shock absorber entails providing a hole in the cylinder and in the reservoir, arranging the respective sleeves and welding them (a weld which must be performed with high quality standards, since it must ensure tightness even when subjected to high internal pressures), and connecting by means of the duct (generally a threaded coupling).

This type of manufacturing entails high costs and the risk that the weld might not be performed perfectly (consequently making the shock absorber unsuitable for operation).

For this reason, the resulting shock absorber might have particularly "delicate" points (where the sleeves are welded to the cylinder and the reservoir, if the welds are not performed with the appropriate skill), in which even a slight knock might cause damage, leading to possible malfunctions.

The aim of the present invention is to provide a method for manufacturing shock absorbers which is quick to perform and suitable to contain costs.

Within this aim, an object of the present invention is to provide a shock absorber which is compact and lacks weak areas which are easily subject to breakage in case of impact.

Another object of the present invention is to provide a method for manufacturing shock absorbers and any shock absorber obtained with the method which have low costs and are relatively simple to provide in practice and safe in application.

This aim and these and other objects, which will become better apparent hereinafter, are achieved by the present method for manufacturing shock absorbers of the type comprising a cylinder within which a piston immersed in a fluid is arranged slidingly, said cylinder having an opening for connection, by means of a duct, to a corresponding opening of an external reservoir, which also contains said fluid, characterized in that said method comprises the steps of providing a heat-flow drill hole, by means of a technique known as "Flowdrilling", at the area where said opening is provided, of said cylinder and/or said piston, obtaining an opening; providing the mutual hermetic connection of the at least one tubular body, provided at said opening by means of said duct, to the other opening.

Further characteristics and advantages of the invention will become better apparent from the following detailed description of a preferred but not exclusive embodiment of a method for manufacturing shock absorbers and of any shock absorber obtained with the method, illustrated by way of nonlimiting example in the accompanying drawings, wherein: ,

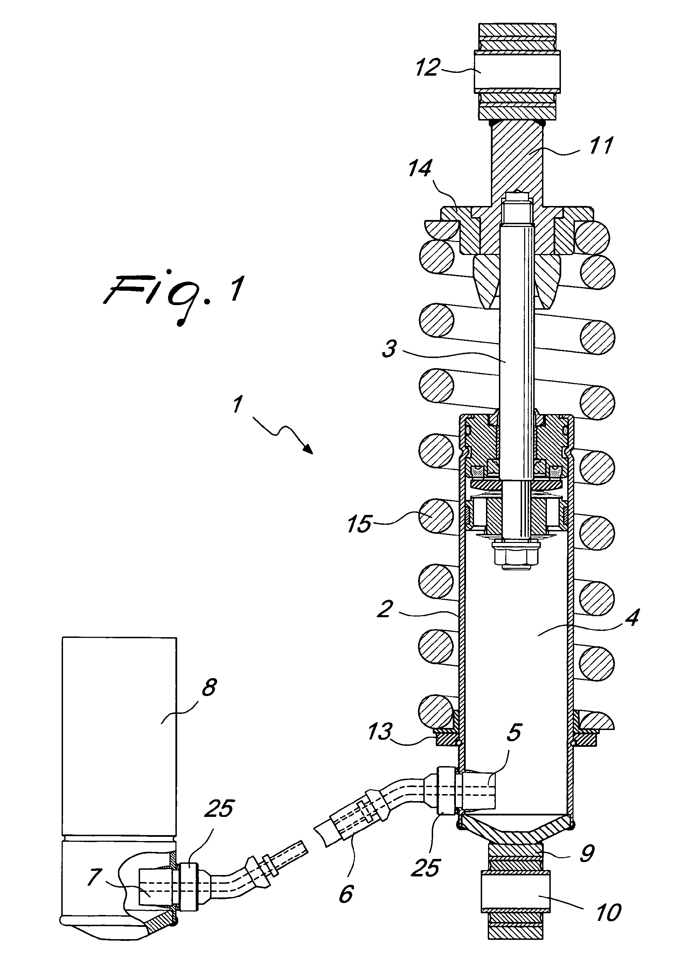

Figure 1 is a sectional side view, taken along a longitudinal plane, of a shock absorber according to the invention;

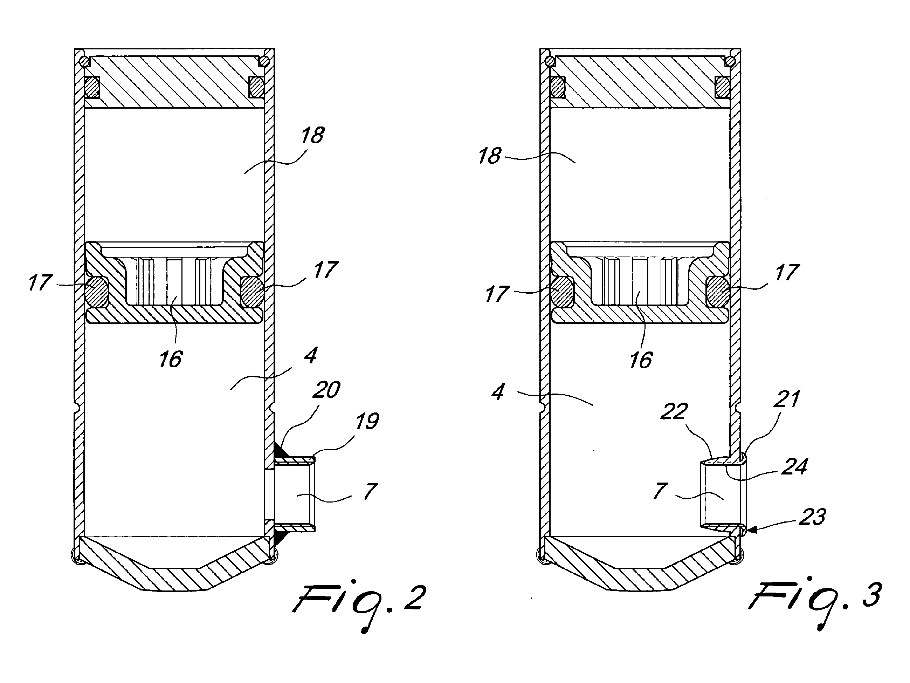

Figure 2 is a sectional side view, taken along a longitudinal plane, of a reservoir of a shock absorber of the traditional type;
Figure 3 is a sectional side view, taken along a longitudinal plane, of a reservoir of a shock absorber according to the invention;

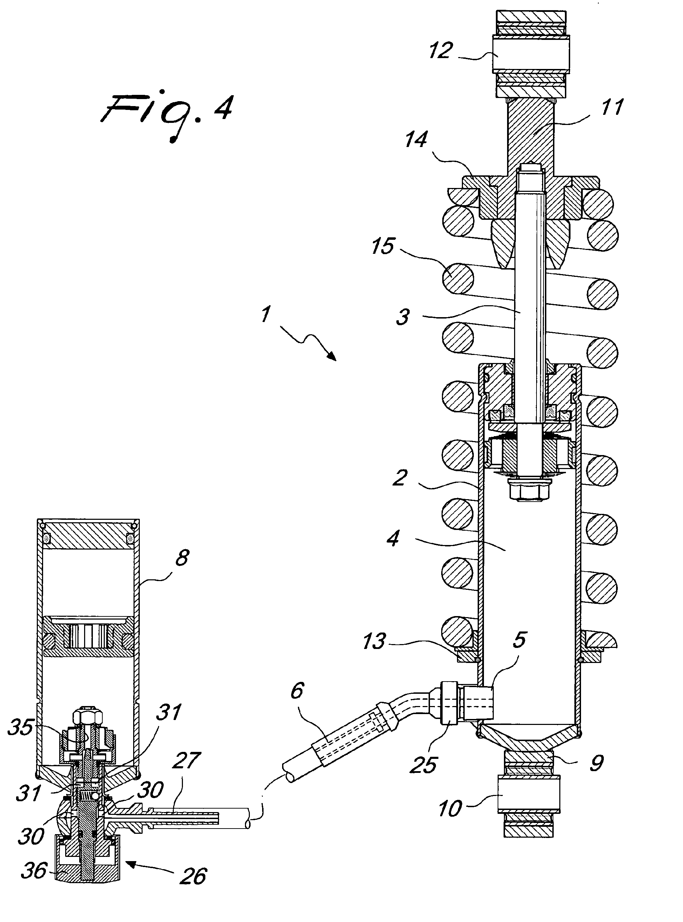

Figure 4 is a sectional side view, taken along a longitudinal plane, of a shock absorber according to the invention according to an alternative embodiment;

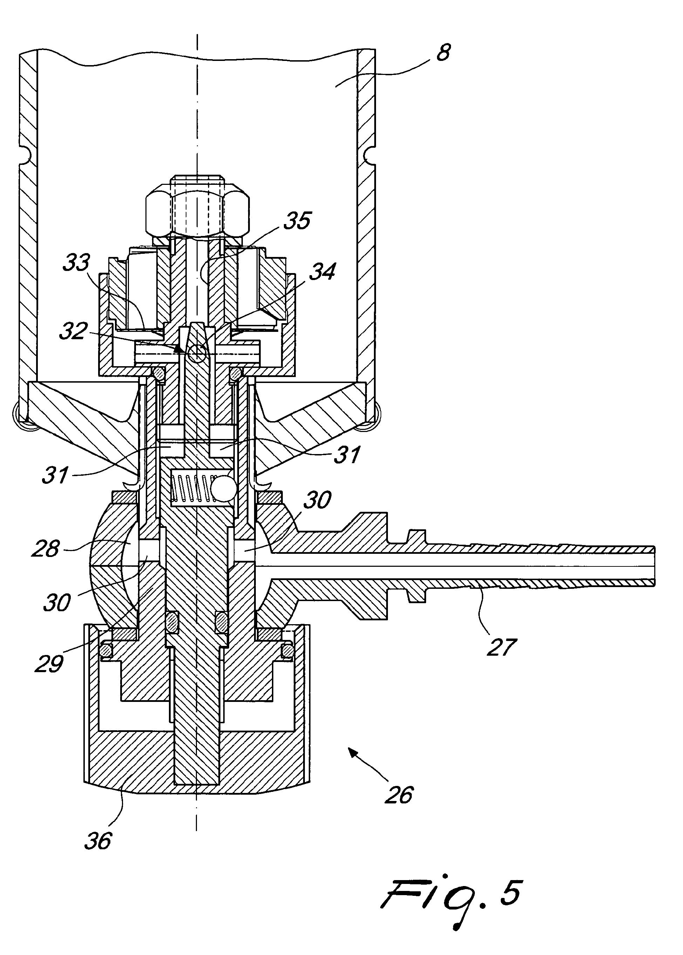

Figure 5 is a sectional side view, taken along a longitudinal plane, of a reservoir of a shock absorber according to the invention according to an alternative embodiment.

With reference to the figures, the reference numeral 1 generally designates a shock absorber obtained with the method according to the invention.

The shock absorber 1 is of the type which comprises a cylinder 2 within which a piston 3 immersed in a fluid is arranged so that it can slide.

The cylinder 2 has an opening 5, through which it is connected, by an appropriate duct 6, to a corresponding opening 7 of an external reservoir 8, which also contains fluid 4.

The cylinder 2 has an end portion 9 which is adapted for stable connection to a portion of the vehicle (the wheel or chassis depending on the arrangement of the shock absorber 1); in particular, there is an anchoring eye 10 which is adapted to mate with the portion of interest.

The piston 3 also has a corresponding end portion 11 which is adapted for stable connection to a portion of the vehicle (in this case also, the wheel or the chassis depending on the arrangement of the shock absorber 1): the portion 11 has a respective end eye 12, which is adapted to mate with the portion of interest.

On the outside of the cylinder 2, proximate to its end 9, there is a center bearing 13; a similar abutment ring 14 is instead rigidly coupled to the end portion 11.

A helical spring 15 is locked between the center bearing 13 and the ring 14, has an axial action and constitutes the elastically acting element of the suspension.

The reservoir 8 also has a cylindrical shape and is provided internally with a partition 16 which can slide longitudinally, remaining parallel to itself: the partition 16 slides hermetically as the consequence of the presence of a sealing gasket 17.

The partition 16 delimits two internal portions: a first portion is the one connected and linked hydraulically to the cylinder 2 by means of the duct 6 and thus accommodates the fluid 4; the second portion, upstream of the partition 16, contains compressed gas 18, the effect of which is to contrast advancements of the partition 16 (a reduction of the volume of said portion entails a considerable increase in the pressure of the gas 18, with a corresponding action which contrasts the further advancement of the partition 16).

In shock absorbers of the traditional type, the opening 5 and the opening 7 are obtained following the provision of a hole in the wall of the cylinder 2 and of the reservoir 8; at the opening (5 or 7 equally), a respective sleeve 19 is welded with the addition of material 20 during said welding.

The sleeve 19 can therefore be threaded internally for coupling to the duct 6.

The method according to the invention instead provides for the formation of a hole by heat-flow drilling, using the technique normally known as "Flowdrilling", at the area where the opening 5 or 7 is to be provided (for particular requirements, even just one of the two openings 5 or 7 might be provided).

Heat-flow drilling (or Flowdrilling) provides the hole by means of a specific tool which is appropriately shaped and comes into contact with the material with relatively high axial pressure and rotation rate (with respect to a traditional drill or mill). The heat generated by friction softens the material: the resulting malleability ensures the possibility to provide a hole without chip-forming, but merely by transferring material from one region to another. While the tool acts on the material, part of the tool forms a collar 21 around the upper surface of the part being machined. The rest of the material forms a bush 22 in the intrados of the part being machined. The resulting collar 21 and bush 22 can be even thicker than the original material (in the embodiment of current interest, the thickness is generally close to the thickness of the drilled plate, i.e., the thickness of the cylinder 2 and of the reservoir 8). The process does not affect the internal structure of the material. Accordingly, the assembly constituted by the collar 21 and the bush 22 thus provided is very tough and strong, and it is also possible to use installations which provide very intense mechanical stresses.

Once the openings 5 and 7 (each with its respective collar 21 and bush 22) have been provided by means of the above-mentioned technique (Flowdrilling), it is sufficient to mate hermetically, for example by means of an appropriately provided material such as sealing paste for connections, the tubular body 23 (constituted by the assembly of the collar 21 and the bush 22), by means of the duct 6, to the other opening 7 or 5 (if both are machined with the above described Flowdrilling technique, with the tubular body 23 of the other machined component).

The mating of the tubular bodies 23 with the duct 6 occurs after providing an internal thread 24 of each tubular body 23 for the engagement of a connection terminal 25.

According to a preferred embodiment of particular practical interest, the internal thread 24 is obtained with a method such as roll threading, i.e., with tools which are adapted to deform the material without chip-forming: in this manner, one avoids weakening the tubular body 23, obtaining a particularly sturdy shock absorber 1.

The thread 24 thus provided reaches substantially the end of the bush 22, ensuring a large grip surface for the connection terminal 25.

The outer collar 21 constitutes a stroke limit abutment for the connection terminal 25, once said terminal has been screwed on and tightened fully onto the thread 24, the mating of the collar 21 with the base of the connecting terminal 25. The collar 21 allows, by way of its deformation by compression, to ensure the correct orientation of the connection terminal 25.

The duct 6 comprises an appropriate internal hydraulic circuit for the guided and controlled conveyance of the fluid 4: by means of this circuit, it is possible to slow the flow of the fluid 4, increasing the damping effect.

The connection terminal 25 can comprise, according to an embodiment of particular interest in practice and in application, a flow-rate limiting valve assembly 26 at least of the one-way type: in practice, the purpose of the valve assembly 26 is to slow the flow in one direction, leaving it instead substantially free in the other direction.

It is evident that with reference to the shock absorber 1, the fluid 4 (as a consequence of an intense stress experienced by said shock absorber) might be expelled at high speed from the cylinder 2 and might reach (again at high speed) the reservoir 8. In such cases, in order to achieve an effective shock absorbing action, it is necessary to interpose a flow-rate limiter indeed to ensure sufficient slowing of the fluid 4.

The valve assembly 26 comprises a coupling nozzle 27 for the duct 6 which leads to an internal chamber 28 which accommodates a sleeve 29 provided with openings 30 for connection to its internal cavity 31, which is provided with at least one throttling valve 32.

The valve assembly 26 comprises a one-way valve 33, which is arranged in parallel to the throttling valve 32, with an allowed direction of flow from the inside of the reservoir 8 toward the nozzle 27.

Positively, the throttling valve 32 is constituted by a substantially conical body 34, which faces and lies proximate to a cylindrical cavity 35: the greater or lesser proximity of the conical body 34 to the cylindrical cavity 35 changes the annular passage port for the fluid 4.

Since the position of the conical body 34 with respect to the cylindrical cavity 35 (which is fixed) is determined by way of the rotation of an adjustment knob 36, the throttling valve 32 is adjustable according to the required performance of the shock absorber 1.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for manufacturing shock absorbers (1) of the type comprising a cylinder (2) within which a piston (3) immersed in a fluid (4) is arranged slidingly, said cylinder (2) having an opening (5) for connection, by means of a duct (6), to a corresponding opening (7) of an external reservoir (8), which also contains said fluid (4), **characterized in that** said method comprises the steps of:
providing a heat-flow drill hole, by means of a technique known as "Flowdrilling", at the area where said opening (5, 7) is provided, of said cylinder and/or said piston, obtaining an opening (5, 7);
providing the mutual hermetic connection of the at least one tubular body (23), provided at said opening (5, 7) by means of said duct (6), to the other opening (7, 5).

2. The method according to claim 1, which consists in providing an internal thread (24) of each of said tubular bodies (23) for the engagement of a terminal (25) for connection to said duct (6).

3. The method according to claim 1, which consists in performing heat-flow drilling to provide the opening (5) of the cylinder (2) and to provide the opening (7) of the reservoir (8).

4. The method according to claim 2, **characterized in that** said internal thread (24) is obtained with a technique of the type of roll threading, i.e., with tools which are adapted to deform material without chip-forming.

5. A shock absorber obtained according to the method of claim 1, **characterized in that** said tubular bodies (23) have an inner bush-shaped region (22) and an outer collar (21).

6. The shock absorber according to claim 5, **characterized in that** the internal surface of each of said tubular bodies (23) has a thread (24) which lies substantially up to the end of said bush (22).

7. The shock absorber according to claim 5, **characterized in that** said outer collar (21) constitutes a stroke limit abutment for the base of a connection terminal (25) which is stably engaged on said thread (24), the mating of the collar (21) with the base of the connection terminal (25) allowing, by way of its deformation by compression, to ensure the correct orientation of the connection terminal (25).

8. The shock absorber according to claim 5, **characterized in that** said duct (6) comprises an appropriate internal hydraulic circuit for the guided and controlled conveyance of the fluid.

9. The shock absorber according to one or more of the preceding claims, **characterized in that** said connection terminal (25) comprises a flow-rate limiting valve assembly (26) of the at least one-way type.

10. The shock absorber according to claim 9, **characterized in that** said valve assembly (26) comprises a coupling nozzle (27) for the duct (6) which leads to an internal chamber (28) which accommodates a sleeve (29) provided with openings (30) for connection to its internal cavity (31) provided with at least one throttling valve (32).

11. The shock absorber according to claim 9, **characterized in that** said valve assembly (26) comprises a one-way valve (33) which is arranged in parallel to said throttling valve (32) with a flow direction which is allowed from the inside of said reservoir (8) toward said nozzle (27).

## Amended claims

### Amended claims in accordance with Rule 137(2) EPC.

**1.** A method for manufacturing shock absorbers (1) of the type comprising a cylinder (2) within which a piston (3) immersed in a fluid (4) is arranged slidingly, said cylinder (2) having an opening (5) for connection, by means of a duct (6), to a corresponding opening (7) of an external reservoir (8), which also contains said fluid (4), said method comprising the steps of;
providing a heat-flow drill hole, by means of a technique known as "Flowdrilling", at the area where said opening (5, 7) is to be provided, of said cylinder, obtaining an opening (5, 7);
providing the mutual hermetic connection of at least one tubular body (23), by the technique known as "Flowdrilling" and provided at said opening (5, 7) by means of said duct (6), to the other opening (7, 5).

**2.** The method according to claim 1, which consists in providing an internal thread (24) of each of said tubular bodies (23) for the engagement of a terminal (25) for connection to said duct (6).

**3.** The method according to claim 1, which consists in performing heat-flow drilling to provide the opening (5) of the cylinder (2) and to provide the opening (7) of the reservoir (8).

**4.** The method according to claim 2, **characterized in that** said internal thread (24) is obtained with a technique of the type of roll threading, i.e., with tools which are adapted to deform material without chip-forming.

**5.** A shock absorber obtained according to the method of claim 1, **characterized in that** said tubular bodies (23) provided by said technique known as "Flowdrilling" have an inner bush-shaped region (22) and an outer collar (21).

**6.** The shock absorber according to claim 5, **characterized in that** the internal surface of each of said tubular bodies (23) has a thread (24) which lies substantially up to the end of said bush (22).

**7.** The shock absorber according to claim 5, **characterized in that** said outer collar (21) constitutes a stroke limit abutment for the base of a connection terminal (25) which is stably engaged on said thread (24), the mating of the collar (21) with the base of the connection terminal (25) allowing, by way of its deformation by compression, to ensure the correct orientation of the connection terminal (25).

**8.** The shock absorber according to claim 5, **characterized in that** said duct (6) comprises an appropriate internal hydraulic circuit for the guided and controlled conveyance of the fluid.

**9.** The shock absorber according to one or more of the preceding claims, **characterized in that** said connection terminal (25) comprises a flow-rate limiting valve assembly (26) of the at least one-way type.

**10.** The shock absorber according to claim 9, **characterized in that** said valve assembly (26) comprises a coupling nozzle (27) for the duct (6) which leads to an internal chamber (28) which accommodates a sleeve (29) provided with openings (30) for connection to its internal cavity (31) provided with at least one throttling valve (32).

**11.** The shock absorber according to claim 9, **characterized in that** said valve assembly (26) comprises a one-way valve (33) which is arranged in parallel to said throttling valve (32) with a flow direction which is allowed from the inside of said reservoir (8) toward said nozzle (27).
